Europäisches Patentamt

European Patent Office

Office européen des brevets

(11) Numéro de publication: **0 236 396**
**B1**

# FASCICULE DE BREVET EUROPEEN

(45) Date de publication du fascicule du brevet: **18.04.90**

(51) Int. Cl.⁵: **D 04 H 3/07,** C 04 B 35/52,
B 29 C 67/14

(21) Numéro de dépôt: **86905315.7**

(22) Date de dépôt: **10.09.86**

(86) Numéro de dépôt international:
**PCT/FR86/00301**

(87) Numéro de publication internationale:
**WO 87/01744 26.03.87 Gazette 87/07**

(54) **MANDRIN POUR LA FABRICATION DE PIECES CREUSES ARMEES.**

(30) Priorité: **13.09.85 FR 8513623**

(43) Date de publication de la demande:
**16.09.87 Bulletin 87/38**

(45) Mention de la délivrance du brevet:
**18.04.90 Bulletin 90/16**

(84) Etats contractants désignés:
**BE CH DE FR GB IT LI NL SE**

(56) Documents cités:
**EP-A-0 039 264**
**FR-A-2 408 676**
**US-A-3 577 294**

(73) Titulaire: **COMMISSARIAT A L'ENERGIE
ATOMIQUE
31/33, rue de la Fédération
F-75015 Paris (FR)**

(72) Inventeur: **CHARRUE, Pierre
157, rue de Fontenay
F-94300 Vincennes (FR)**
Inventeur: **DURAND, Serge
14, route de Fourc
F-33610 Cestas (FR)**

(74) Mandataire: **Mongrédien, André et al
c/o BREVATOME 25, rue de Ponthieu
F-75008 Paris (FR)**

EP 0 236 396 B1

Courier Press, Leamington Spa, England.

## Description

L'invention concerne principalement un mandrin pour la fabrication complète de pièces creuses comportant une armature constituée de fils s'étendant selon au moins trois directions différentes. L'invention concerne également un procédé de fabrication d'une pièce creuse de ce type au moyen d'un tel mandrin.

Les pièces creuses constituées d'une armature de fils s'étendant selon au moins trois directions différentes et d'un matériau de remplissage assurant la densification de cette armature connaissent actuellement un essor important. Par "densification", on désigne la ou les opérations permettant de remplir les vides de l'armature, ce qui a pour effet d'en augmenter la densité. L'essor des pièces ainsi réalisées est dû en grande partie à leurs qualités de résistance mécanique et thermique dans toutes les directions. On utilise notamment de telles pièces dans les secteurs automobiles et aèronautiques, par exemple pour la fabrication d'éléments de freins et d'embrayage et pour la réalisation des parois des chambres à combustion et des pistons des véhicules automobiles.

Pour réaliser de telles pièces, on a décrit dans le brevet français n° 2 408 676 déposé le 23 septembre 1977 au nom du Commissariat à l'Energie Atomique un procédé particulièrement intéressant notamment en raison de sa facilité de mise en oeuvre et des grandes possibilités qu'il offre aussi bien en ce qui concerne les dimensions des pièces réalisées qu'en ce qui concerne la densité des fils constituant l'armature de ces pièces.

Ce procédé repose sur l'utilisation d'un mandrin support réalisé en un matériau apte à recevoir des picots par implantation directe par pression avec ou sans préperçage tel qu'une mousse à base de polyuréthe ou une mousse phénolique. Au cours d'une première opération, on implante sur ce mandrin des rangées de picots réalisés en un matériau textile filiforme prérigidifié par exemple par imprégnation d'une résine durcissable, de façon à délimiter entre les picots des couloirs longitudinaux et circonférentiels. On dispose ensuite par tramage et par bobinage des fils longitudinaux et circonférentiels dans les couloirs formés entre les picots, afin de réaliser des nappes successives superposées. La structure ainsi obtenue, constituée de fils entrelacés selon trois directions différentes, présente un certain pourcentage de vides dans lesquels on introduit ensuite un matériau de remplissage tel qu'une résine phénolique. En élevant la température jusqu'à environ 170°C, on polymérise la résine, ce qui permet d'assurer la rigidification de la structure et d'en compléter la densification. Le mandrin est alors éliminé par usinage.

Ce procédé connu repose principalement sur l'utilisation d'un mandrin support choisi essentiellement pour ses propriétés mécaniques. En effet, le matériau qui le constitue doit être assez rigide pour garantin un dimensionnement satisfaisant de l'intérieur de la pièce et une bonne tenue des picots implantés et suffisamment déformable pour permettre une implantation des picots sous l'effet d'une force limitée. Les mousses utilisées habituellement dans ce procédé doivent en outre supporter une élévation de température jusqu'à environ 170°C, correspondant à la polymérisation de la résine.

Cependent, les mousses à base de polyuréthane et les mousses phénoliques utilisées actuellement dans la composition des mandrins ne résistent pas à des températures sensiblement plus élevées qui sont atteintes lors de la densification de la structure dans certains cas particuliers.

Un premier de ces cas particuliers concerne les procédés dans lesquels la densification de la structure est obtenue par pyrolyse d'une résine présentant un résidu pyrolytique élevé, tel qu'une résine phénolique remplissant cette structure. En effet, la pyrolyse de la résine nécessité un traitement thermique à environ 700°C qui n'est pas supporté par les mandrins en mousse de polyuréthane ou en mousse phénolique.

Un autre cas particulier concerne les procédés dans lesquels des brais de carbone fondant à haute température (800 à 900°C) sont utilisés pour assurer la densification de la structure.

Un troisième cas particulier dans lequel les mandrins actuels ne peuvent être utilisés tout au long du procédé décrit précédemment concerne la fabrication des pièces creuses dites "carbone-carbone", dans lesquelles les fils constituant la structure ainsi que le matériau remplissant les vides de cette structure et assurant donc sa densification sont constitutés par du carbone. En effe, quelle que soit la technique utilisée pour densifier la structure, il est toujours nécessaire d'élever la température nettement au-delà des limites de températures supportées par les mandrins en mousse à base de polyuréthane ou en mousse phénolique. Cette remarque est illustrée notamment par FR—A—2516914 qui décrit notamment, dans le cas de la fabrication d'une pièce "carbone-carbone", un procédé de densification nécessitant une élévation de la température jusqu'à environ 1100°C. On citera également le brevet français n° 2 479 173 déposé le 28 mars 1980 par le Commissariat à l'Energie Atomique et par l'Office National d'Etudes et de Recherches Aerospatiales, selon lequel la densification d'une pièce, notamment du type "carbone-carbone", est obtenue par injection de brais de carbone à haute température (600°C à 900°C) et sous haute presion.

Dans tous les cas qui viennent d'être cités et qui ne sont bien évidemment pas limitatifs, il n'est pas possible de réaliser actuellement la densification de la structure sur le mandrin ayant servi à l'implantation des picots, puis aux opérations de bobinage et de tramage des fils dans les couloirs formés entre ces picots. En effet, on ne disposé pas actuellement d'un mandrin présentant à la fois les propriètés mécaniques requises pour permettre une bonne implantation mécanique des picots et une résistance thermique suffisante pour atteindre des températures variant entre 700°C et plus de 1100°C.

Pour cette raison, lorsque de telles températures son atteintes actuallement lors de l'étape de densification, il est d'usage d'éliminer le mandrin en mousse par usinage et de le remplacer par un mandrin réalisé en un autre matériau (par exemple métallique) résistant à cette température avant d'éffectueur la densification.

Il apparaît immédiatement que cette nécessité de remplacer le mandrin au cours de la fabrication de la pièce pénalise sérieusement le procédé, d'une part en en augmentant le coût et la durée, d'autre part en introduisant des problèmes techniques supplémentaires tels que ceux qui peuvent résulter notamment d'une dilatation différentielle entre la pièce et le mandrin utilisé lors de la densification.

La présente invention à précisément pour objet un mandrin présentant à la fois les qualités mécaniques requises par le mise en oeuvre du procédé décrit dans le brevet français n° 2 408 676 et les qualités de résistance thermique permettant de réaliser l'ensemble du procédé sur ce même mandrin, même lorsque la montée en température lors de l'étape de densification atteint ou dépasse 700°C.

A cet effet et conformement à un premier mode de realisation de l'invention, il est proposé un mandrin pour la fabrication complète de pièces creuses par implantation de picots sur le mandrin, mise en place de fils selon au moins deux directions différentes dans les couloirs formés entre les picots, puis densification de la structure ainsi obtenue sur le mandrin, ce mandrin étant caractérisé en ce qu'il comprend, au moins dans une zone périphérique, une mousse de silice ayant une résistance à la compression (par exemple comprise entre 1 MPa et 50 MPa) suffisante pour permettre l'implantation des picots et la densification, cette mousse conservant son intégrité géométrique jusqu'à une température d'au moins 700°C, cette température pouvant atteindre et même dépasser largement 1100°C.

Sie les dimensions de la pièce à réaliser l'exigent, le mandrin comprend au moins deux blocs de mousse solidarisés par au moins une pièce de liaison interné sur laquelle les blocs sont collés au moyen d'un collé résistant également à une température d'au moins 700°C environ.

Selon un autre mode de réalisation de l'invention, le mandrin comprend un feutre de silice, collé sur un support interne au moyen d'une colle, ledit feutre ayant une résistance à la compression suffisante pour permettre l'implantation des picots et la densification, ledit feutre conservant son intégrité géomètrique jusqu'à une température d'au moins 700°C, et la colle, résistant à une température d'au moins 700°C environ.

Le mandrin selon l'invention se caractérisé essentiellement, comme on l'a vu, par le fait que ses caractéristiques mécaniques permettent l'implantation et le maintien des picots et par le fait qu'il peut supporter une température d'au moins 700°C environ. Ce mandrin trouve donc une application privilégiée lorsqu'il est utilisé pour mettre en oeuvre le procéde décrit dans le brevet français 2 408 676, dans le cas où l'étape de densification de la structure constituant l'ossature de la pièce nécessite une montée en température supérieure ou égale à 700°C. Cette application n'est cependant pas limitative et on comprendra aisément qu'un tel mandrin peut aussi être utilisé pour la mise en oeuvre du procéde décrit dans le brevet français 2 408 676, même lorsque l'étape de densification est réalisée sans que le montée en température n'atteigne 700°C. En effet, le coût de la silice est très inférieur à celui des mousses phénoliques utilisées habituellement.

L'invention à également pour objet un procédé de fabrication d'une pièce creuse, ce procédé comprenant de façon connue notamment du brevet français n° 2 408 676 les étapes suivantes:

— implantation de picots sur un mandrin, de façon à former entre les picots des couloirs s'étendant selon au moins deux directions différentes;

— mise en place de fils dans les couloirs formés entre les picots, de façon à former des couches de fils s'étendant alternativement selon chacune desdites directions; et

— densification de la structure ainsi obtenue à une température d'au moins 700° environ.

Conformément à l'invention, ce procédé se caractérise en ce que toutes les étapes sont effectuées au moyen d'un mandrin unique réalisé de la manière définie précédemment.

Préalablement à l'implantation des picots sur le mandrin, on donne àce dernier la forme souhaitée soit par usinage, soit, dans le cas où le matériau constituant le mandrin se présente sous la forme d'un feutre, par formage.

Quelques exemples de mise en oeuvre de l'invention, vont maintenant être décrits, à titre illustratif et nullement limitatif.

Le procédé de fabrication de pièces creuses comportant une ossature de fils s'étendant selon au moins trois directions différentes se caractérisé dont conformément à l'invention par le fait que la fabrication de la pièce s'éffectue en totalité sur un mandrin unique, même lorsque la température s'éléve au cours de cette fabrication jusqu'à 700°C ou plus.

De façon connue, la première étape de ce procédé consiste à implanter dans la zone périphérique du mandrin, sur une profondeur d'environ 15 mm par exemple, des picots constitués de préférence par des fils de longueur et de diamètre déterminés, rigidifiés notamment par une imprégnation préalable d'une résine thermodurcissable. L'implantation des picots s'éffectue soit directement, soit après avoir réalisé auparavant des perforations dans le mandrin. Dans l'un et l'autre cas, la force appliquée sur les picots pour effectuer l'implantation est limitée, notamment pour des picots de petit diamètre.

Les picots sont implantés sur le mandrin selon un réseau donné, de façon à former entre eux des couloirs selon au moins deux directions différentes. Lorsque la pièce à réaliser est une pièce de révolution, les picots sont le plus souvent implantés radialement, de façon à former entre eux des couloirs longitudnaux et des couloirs circonférentiels.

Au cours de la deuxième étape du procédé, on dispose alternativement dans les couloirs ainsi formés entre les picots des couches d'un ou plusieurs fils orientés alternativement selon les directions définies par ces couloins. Dans le cas particulier de la fabrication d'une pièce de révolution, on dispose donc alternativement des couches de fils dans les couloirs longitudinaux et dans les couloirs circonférentiels formés entre les picots. Une machine permettant de réaliser ces opérations est décrite en détail dans le brevet français n° 2 315 562. Il est à noter qu'au cours de ces opérations, les picots doivent être maintenus de façon suffisamment rigide par le mandrin pour que leur orientation ne soit pas modifiée au point d'empêcher la mise en place des fils.

Les fils qui constituent les picots, de même que les fils qui sont placés dans les couloirs formés entre ces picots, peuvent être aussi bien des fils que des filaments, des fibres ou des mêches. De plus, selon la destination de la pièce à réaliser, ces fils peuvent être réalisés en graphite, en carbone, en verre, en silice, en polyamide, en polyimide, etc. . .

Lorsqu'un nombre de couches de fils satisfaisant à été placé dans les couloirs formés entre les picots, on obtient autour du mandrin une structure formée de fils s'étendant selon au moins trois directions différentes et constituant l'ossature de la pièce à réaliser. Cette structure se présente sous la forme d'un réseau de fils formant entre eux des vides répartis dans toute l'épaisseur de la structure.

La dernière étape du procédé, dite de densification, a justement pour objet de remplir les vides de cette structure afin d'en accroître la densité et de la rigidifier.

Selon la pièce à réaliser, cette étape de densification exige une montée en température qui peut être très variable. Ainsi, lorsque la densification s'effectue en injectant une résine dans la structure, puis en polymérisant cette résine, la montée en température ne dépasse pas 150°C environ.

Au contraire, lorsque l'étape de densification exige la pyrolyse de la résine phénolique, la température s'élève à environ 700°C. De même, lorsque la densification s'éffecteur par injection de brais de carbone, cette injection s'effectue sous haute pression et à une température comprise entre 600°C et 900°C. Enfin, lorsque la densification s'effectue par décomposition d'un hydrocarbure liquide tel que du cyclohexane à l'intérieur de la structure, la montée en température peut atteindre 1000°C à 1300°C.

Conformément à l'invention, si l'on veut que l'étape de densification soit réalisée sans retirer la structure du mandrin sur lequel on a réalisé au préalable l'implantation des picots et le dépôt des fils en couches successives, même dans le cas où cette étape de densification s'effectue à haute température, le mandrin soit satisfaire à des conditions de résistance mêcanique et thermique contradictoires.

En premier lieu, afin que l'implantation des picots dans le mandrin ainsi que le maintien des picots puissent se faire de façon satisfaisante, le matériau doit être suffisamment poreux pour permettre cette implantation, tout en présentant une résistance à la compression $\sigma_R$ assurant le maintien des picots, et en conservant son intégrité géométrique lors de l'implantation.

Dans la pratique, les matériaux satisfaisant à cette première condition sont déterminés expérimentalement. A cet effet, on implante dans le matériau, sur une profondeur de 10 à 15 mm, des picots d'acier d'environ 1 mm de diamètre, en laissant un espace très faible entre les picots (2 à 3 mm par exemple). On extrait ensuite ces picots et on contrôle si le matériau a conservé son intégrité géométrique.

En complément, la résistance à la compression du matériau constituant le mandrin doit aussi être suffisante pour permettre à ce dernier de supporter la mise sous pression qui accompagne généralement la densification, malgré la fragilisation induite par l'implantation des picots. En effet, la densification s'effectue à une pression qui peut être par exemple, d'environ 770 kPa.

Pour saatisfaire aux conditions de bonne tenue mêanique désirées, on choisit de préférence un matériau se présentant sous la forme d'une mousse ou d'un feutre.

La deuxiéme condition que doit nécessairement remplir le mandrin est qu'il doit conserver son intégrité géométrique jusqu'à une température d'au moins 700°C environ.

Par ailleurs, la masse volumique P du mandrin est de préférence inférieure à 0,5 et son coefficient de dilatation $\alpha$, de préférence inférieur à $100.10^{-6}$°C$^{-1}$ dans les conditions de tempèratures considérées, c'est-à-dire par exemple entre 0 et environ 700°C.

Enfin, le rapport des modules d'élasticité E du mandrin à la température maximum atteinte lors de la densification (par exemple à 700°C) et à la température ambiante (c'est-à-dire à environ 20°C) est, de préférence, supérieure à 0,5.

Une première famille de matériaux satisfaisant ces conditions concerne certaines mousses minérales ou non organiques. Parmi ces mousses, on citera principalement les mousses de silice. Ces mousses peuvent notamment être fabriquées à partir de silice vitreuse obtenue par électrofusion (taux de $SiO_2$ supérieur ou égal à 99,5%). Elles sont élaborées en incorporant un agent pyrophore chimique dans une barbotine. Le mélange est ensuite coulé, puis cuit au four, sous forme de blocs. Des mousses de ce type sont commercialisées notamment par le Societé Cotronics sous l'appelation "mousse 310 type 1" et par la Société Vesuvius sous l'appelation "mousse glasrock 50".

Les qualités de résistance mécanique des ces mousses de silice s'améliorent jusqu'à 800°C environ et elles peuvent encore être utilisées jusqu'à environ 1100°C. En outre, leur densité finale est de l'ordre de 0,5.

La mousse de silice se présente sous la forme de blocs dans lesquels le mandrin peut être réalisé directement par usinage, par exemple ou tour, dans le cas de la fabrication d'une pièce de révolution.

Lorsque les dimensions et notamment la longueur de la pièce à réaliser excèdent les dimensions des blocs de mousse disponibles, il est possible de fabriquer le mandrin en plaçant bout à bout deux ou plusieurs blocs.

Ces blocs ne peuvent toutefois par être collés directement bout à bout. En effet, l'adhésif qui doit être utilisé doit également résister à une température d'au moins 700°C environ. Or, un tel adhésif est beaucoup plus dur que la mousse de silice et ne permetrait pas d'implanter des picots au milieu du joint séparant deux blocs.

Pour cette raison, il est proposé de percer un alésage central dans chacun des blocs, de ménager une ou plusieurs rainures longitudinales à l'intérieur de cet alésage et de relier les différents blocs en plaçant dans ces rainures des pièces internes de liaison se présentant sous la forme de clavettes. Ces clavettes peuvent être réalisées également en mousse de silice ou en tout autre matériau résistant à la température d'au moins 700°C environ. Les clavettes sont fixés dans les rainures à l'aide d'une colle au d'un ciment résistant également à cette température. On utilise par exemple à cet effet une colle constituée d'une charge d'alumine et d'un liant minéral.

L'usinage externe du mandrin s'effectue ensuite à l'aide d'un outil de coupe, par enlèvement de matière dans les blocs de silice.

Dans un autre mode de réalisation de l'invention, on utilise pour réaliser le zone periphérique du mandrin, dans laquelle s'effectue l'implantation des picots, un matériau minéral ou non organique (silice, alumine, etc...) se présentant sous la forme d'un feutre. Un tel feutre est commercialisé sous forme de nappes dont l'épaisseur varie généralement de 6 mm à 25 mm. Ce matériau, qui se présente initialement sous forme humide et donc maléable, devient rigide et conserve sa forme initiale après cuisson par étuvage ventilé à environ 80°C pendan au moins 48h. Ses caractéristiques mécaniques et thermiques sont alors équivalentes à celles des mousses en matériaux minéraux.

Conformément à l'invention, on utilise de préférence un feutre constitué de fibres de silice et d'un liant minéral constitué par exemple de silice coloïdale en solution aqueuse ou d'un mélange de silicates. Par exemple, on peut utiliser un feutre en nappe Kerlane HD, commercialisé par la société Kerlane, associé au durcisseur D15 commercialisé par la même société. Un tel feutre autorise une montée en température jusqu'à 1100°C au moins.

On peut utiliser aussi un feutre composé de fibres d'alumine imprégnées d'un liant minéral. Un tel feutre supporte en continu une température d'environ 1650°C et peut supporter temporairement une température proche de 2000°C.

En pratique, la nappe de feutre est placée sur un support interne réalisé en un matériau satisfaisant également aux conditions de tenue mécanique et thermique imposées par le procédé. Il peut s'agir notamment d'un ciment ou de tout autre matériau réfractaire de structuration, ou encore d'un grillage rigide ou de tou autre support métallique réalisé en un matériau tel que l'acier "invar" à faible coefficient de dilatation.

Le feutre est fixé sur le support interne au moyen d'un adhésif choisi de façon à résister également à la température d'utilisation, c'est-à-dire à une température d'au moins 700°C environ. A cet effet, on utilisera par exemple un adhésif constitué d'une charge d'alumine et d'un liant minéral, résistant en continu à une température d'environ 1650°C.

Comme la mousse de silice, le feutre minéral peut être usiné après cuisson par des procédés d'usinage classiques, pour donner à l'extérieur du mandrin la forme souhaitée.

La forme extérieure du mandrin peut aussi être obtenue par conformage, ou par moulage sous pression. En effet, le feutre se prête bien à ce type de formage.

Un autre avantage de l'utilisation d'un matériau sous forme de feutre concerne le caractère très maléable de celu-i lorsqu'il est sous forme humide.

On peut ainsi réaliser des ébouches de géométrie complexe et de grande dimension. En particulier, la fabrication de pièces ne présentant pas de symétrie de révolution est facilitée par l'utilisation d'un mandrin réalisé de cette manière.

En outre, l'utilisation de feutre de silice permet de travailler en atmosphère oxydante, et notamment à l'air.

Enfin, il est à noter que l'utilisation de feutre de silice permet de réduire le coût du mandrin de façon très sensible par rapport aux mandrins existant actuellement. Cette caractéristique justifie l'empoi d'un tel mandrin même dans le cas où la température atteinte lors de l'étape de densification est suffisamment basse pour permettre l'utilisation d'un mandrin classique en mousse a base de polyuréthane ou en mousse phénolique.

Les exemples précédemment décrits se limitent à l'utilisation de mousse de silice ou de feutre de silice ou d'alumine, car la silice et l'alumine sont les seuls matériaux connus actuellement commercialisés sous forme de mousse et/ou de feutre et remplissant les conditions de tenue méanique et de tenue à la température imposées au mandrin.

Cependant, l'invention n'est pas limitée à ces matériaux et s'applique à tous les matériaux ou mélanges de matériaux remplissant les conditions de tenue mécanique et de tenue à la température d'au moins 700°C nécessaire à la densification. En particulier, des mousses telles qu'une mousse de graphite, ou des feutres tels que des feutres de carbure de silicium et de

carbure de bore rèsistant sous atmosphère inerte à des températures d'environ 1700°C et 2250°C, respectivement, pourraient aussi être utilisées.

En couclusion, il est maintenant possible grâce au mandrin selon l'invention de réaliser sur un mandrin unique l'ensemble des opérations de fabrication de pièces creuses à ossature multidirectionnelle, même dans le cas où l'étapes de densification s'éffectue à une température d'au moins 700°C environ.

## Revendications

1. Mandrin pour la fabrication complète de pièces creuses par implantation de picots sur le mandrin, mise en place de fils selon au moins deux directions différentes dans des couloirs formés entre les picots, puis densification de la structure ainsi obtenue sur le mandrin, ce mandrin étant caractérisé en ce qu'il comprend, au moins dans une zone périphérique, une mousse de silice ayant une résistance à la compression suffisante pour permettre l'implantation des picots et la densification, cette mousse conservant son intégrité géométrique jusqu'à une température d'au moins 700°C.

2. Mandrin selon la revendication 1, caractérisé en ce qu'il comprend au moins deux blocs de mousse solidarisés par au moins une pièce de liaison interne sur laquelle lesdits blocs sont collés au moyen d'une colle résistant à une température d'au moins 700°C environ.

3. Mandrin pour la fabrication complète de pièces creuses par implantation de picots sur le mandrin, mise en place de fils selon au moins deux directions différentes dans des couloirs formés entre les picots, puis densification de la structure ainsi obtenue sur le mandrin, ce mandrin étant caractérisé en ce qu'il comprend un feutre de silice, collé sur un support interne au moyen d'une colle, ledit feutre ayant une résistance à la compression suffisante pour permettre l'implantation des picots et la densification, ledit feutre conservant son intégrité géométrique jusqu'à une température d'au moins 700°C, et la colle résistant à une température d'au moins 700°C environ.

4. Procédé de fabrication d'une pièce creuse, comprenant les étapes suivantes:

— implantation de picots sur un mandrin, de façon à former entre les picots des couloirs s'étendant selon au moins deux directions différentes;

— mise en place de fils dans les couloirs formés entre les picots, de façon à former des couches de fils s'étendant alternativement selon chacune desdites directions; et

— densification de la structure ainsi obtenue à une température d'au moins 700°C environ, caractérisé en ce que toutes lesdites étapes sont effectuées au moyen d'un mandrin unique réalisé selon l'une quelconque des revendications 1 à 3.

5. Procédé selon la revendication 4, caractérisé en ce que, préalablement à l'implantation des picots, on usine le mandrin pour lui donner la orme souhaitée.

6. Procédé selon les revendications 3 et 4, caractérisé en ce que, préalablement à l'implantation des picots, on effectue on formage du mandrin, pour lui donner la forme souhaitée.

## Patentansprüche

1. Dorn für die vollständige Herstellung von hohlen Teilen durch die Implantation von Spitzen auf dem Dorn, durch Anordnen von Fasern entlang wenigstens zweier verschiedener Richtungen in zwischen den Spitzen gebildeten Gängen und durch anschließende Verdichtung der so auf dem Dorn erhaltenen Struktur, wobei der Dorn dadurch gekennzeichnet ist, daß er wenigstens in einem Randbereich einen Schaum aus Siliziumdioxid aufweist, der einen hinreichenden Kompressionswiderstand bletet, um die Implantation der Spitzen und die Verdichtung zu ermöglichen, wobei dieser Schaum seine geometrische Ausgangsform bis zu einer Temperatur von wenigstens 700°C bewahrt.

2. Dorn nach Anspruch 1, dadurch gekennzeichnet, daß er wenigstens zwei Schaumblöcke aufweist, die durch wenigstens ein internes Verbindungsteil versteift sind, auf welches die Blöcke mit einem bis zu einer Temperatur von wenigstens etwa 700°C beständigen Klebemittel geklebt sind.

3. Dorn für die vollständige Herstellung von hohlen Teilen durch die Implantation von Spitzen auf dem Dorn, durch Anordnen Fasern entlang wenigstens zweier verschiedener Richtungen in zwischen den Spitzen gebildeten Gängen und durch anschließende Verdichtung der so auf dem Dorn erhaltenen Struktur, wobei der Dorn dadurch gekennzeichnet ist, daß er einen Filz aufweist, der mittels eines Klebers auf ein internes Stützteil geklebt ist, wobei der Filz einen hinreichenden Kompressionswiderstand bletet, um die Implantation der Spitzen und die Verdichtung zu ermöglichen, wobei dieser Filz seine geometrische Ausgangsform bis zu einer Temperatur von wenigstens 700°C bewahrt und wobei der Kleber bis zu einer Temperatur von wenigstens etwa 700°C beständig ist.

4. Verfahren zur Herstellung eines hohlen Teiles, das folgende Verfahrensschritte aufweist:

— Implantation von Spitzen auf einem Dorn, derart, daß zwischen den Spitzen sich Gänge entlang wenigstens zweier verschiedener Richtungen erstrecken;

— Anordnung von Fasern in den zwischen den Spitzen gebildeten Gängen, derart, daß Faserschichten gebildet werden, die sich abwechselnd entlang einer der Richtungen erstrecken; und

— die Verdichtung der so erhaltenen Struktur bei einer Temperatur von wenigstens etwa 700°C, dadurch gekennzeichnet, daß alle Verfahrensschritte mittels eines eindeutigen nach einem der Ansprüche 1 bis 3 hergestellten Dorns durchgeführt werden.

5. Verfahren nach Anspruch 4, dadurch gekennzeichnet, daß man vor der Implantation der Spitzen den Dorn bearbeitet, um ihm die gewünschte Form zu geben.

6. Verfahren nach den Ansprüchen 3 und 4, dadurch gekennzeichnet, daß man vor der Implantation der Spitzen den Dorn formt, um ihm die gewünschte Form zu geben.

**Claims**

1. Chuck for the complete production of hollow members of the installation of prongs on the chuck, the fitting of wires in at least two different directions in passages formed between the prongs, followed by the densification of the thus obtained structure on the chuck, said chuck being characterized in that it comprises, at least in a peripheral zone, a silica foam having an adequate compression strength to permit the installation of the prongs and the densification, said foam retaining its geometrical integrity up to a temperature of at least 700°C.

2. Chuck according to claim 1, characterized in that it comprises at least two foam blocks joined by at least one internal connecting part and to which said blocks are bonded by means of a glue resisting a temperature of at least approximately 700°C.

3. Chuck for the complete production of hollow members by the installation of prongs on the chuck, the fitting of wires in an least two different directions in passages formed between the prongs, followed by the densification of the thus obtained structure on the chuck, said chuck being characterized in that it comprises a silica felt, bonded to an internal support by means of a glue, said felt having an adequate compression strength to permit the installation of prongs and densification, said felt retaining its geometrical integrity up to a temperature of at least 700°C and the glue resisting a temperature of at least approximately 700°C.

4. Process for the production of a hollow member involving the following stages:
— installation of prongs on a chuck, so as to form between the prongs passages extending in at least two different directions;
— the fitting of wires in the passages formed between the prongs, so as to form layers of wires extending alternately in each of said direction; and
— densification of the thus obtained structure at a temperature of at least approximately 700°C, characterized in that all these stages are performed by means of a single chuck realized in accordance with any one of the claims 1 to 3.

5. Process according to claim 4, characterized in that, prior to the installation of the prongs, the chuck is machined in order to give it the desired shape.

6. Process according to claims 3 and 4, characterized in that, prior to the installation of the prongs, the chuck is shaped to give it the desired shape.